# FASCICULE DE BREVET EUROPEEN

(11) **EP 0 839 456 B1**
(45) Date de publication et mention de la délivrance du brevet: **25.06.2003**
(21) Numéro de dépôt: 97402585.0
(22) Date de dépôt: 30.10.1997
(51) Int. Cl.: A23C 9/13, A23C 19/093, A21D 13/08, A23G 3/00, A23P 1/16

(54) **Composition alimentaire solide avec fourrage foisonné et procédé de préparation**
Feste Nahrungsmittelzusammensetzung mit aufgeschlagener Füllung und Verfahren zu deren Herstellung
Solid food product with foamed stuffing and process for preparing

(30) Priorité: 31.10.1996 FR 9613328
(43) Date de publication de la demande: 06.05.1998
(73) Titulaire: COMPAGNIE GERVAIS DANONE, 92300 Levallois Perret (FR)
(72) Inventeur: Pingel, Alexandrine, 86495 Vogtareuth (DE); Schokols, Manfred, 83022 Rosenheim (DE)
(74) Mandataire: Warcoin, Jacques

(56) Documents cités:
- EP-A- 0 135 768
- EP-A- 0 162 644
- EP-A- 0 256 561
- EP-A- 0 440 203
- EP-A- 0 607 471
- WO-A-95/22906
- DATABASE WPI Section Ch, Week 7905 Derwent Publications Ltd., London, GB; Class D13, AN 79-09068b XP002034761 & JP 53 145 959 A (ASAHI ELECTROCHEMICAL CO) , 19 décembre 1978
- CHEMICAL ABSTRACTS, vol. 121, no. 3, 18 juillet 1994 Columbus, Ohio, US; abstract no. 33812, XP002054186 & JP 06 078 672 A (KANEGAFUCHI CHEMICAL IND)
- CHEMICAL ABSTRACTS, vol. 89, no. 3, 17 juillet 1978 Columbus, Ohio, US; abstract no. 22567, XP002054187 & JP 53 026 354 A (RIKEN VITAMIN OIL CO)
- DATABASE WPI Section Ch, Week 8412 Derwent Publications Ltd., London, GB; Class D13, AN 84-071558 XP002054188 & JP 59 025 639 A (KAO CORP) , 9 février 1984
- DATABASE WPI Section Ch, Week 7835 Derwent Publications Ltd., London, GB; Class D13, AN 78-62774a XP002034762 & JP 530 890 065 A (ASAHI ELECTROCHEMICAL CO) , 29 juillet 1978
- DATABASE WPI Section Ch, Week 8414 Derwent Publications Ltd., London, GB; Class D13, AN 84-085136 XP002034763 & JP 59 034 860 A (NITTA GELATIN KK) , 25 février 1984
- PATENT ABSTRACTS OF JAPAN vol. 004, no. 054 (C-008), 23 avril 1980 & JP 55 026823 A (OOTA TOSHIYUKI;OTHERS: 01), 26 février 1980,

## Description

La présente invention concerne une composition alimentaire solide formée d'un fourrage à base de produit laitier, notamment frais, fermenté ou non, revêtu au moins partiellement d'une couche de protection, notamment un enrobage en chocolat ou pâte à glacer ou base pâtissière ou biscuitière.

Elle concerne également un procédé de préparation d'une telle composition. Elle concerne également une composition crémeuse à utiliser notamment en tant que fourrage.

Il existe dans le domaine des compositions alimentaires, et depuis un certain temps, des produits dénommés barres alimentaires à base de différents produits pâtissiers fourrés avec des produits chocolatés et/ou des produits sucrés divers.

La quantité importante de sucre permet d'abaisser l'activité de l'eau et de ce fait empêche un développement bactérien néfaste à la qualité du produit.

Ce type de produits est perçu par le consommateur comme étant des produits longue conservation au même titre que les gâteaux secs par exemple.

Il existe également des barres alimentaires à base de produits laitiers frais non fermentés dont la durée de conservation est courte.

Il serait cependant souhaitable de pouvoir disposer de barres alimentaires comprenant un fourrage à base de produit laitier, notamment frais, fermenté ou non, pouvant, du fait de sa forte teneur en produit laitier notamment frais, apporter aux consommateurs la garantie d'une alimentation équilibrée de plus en plus exigée dans nos sociétés modernes.

La réalisation de telles barres alimentaires se heurte à différents problèmes qu'il s'agit de résoudre simultanément à savoir consistance suffisante, stabilité, éventuellement qualité gustative analogue à un produit frais. Par exemple, une émulsion huile dans l'eau d'un fromage frais fermenté et d'une matière grasse végétale conduit à l'obtention d'un produit frais mais, par contre, la consistance n'est pas suffisante à moins d'y ajouter une quantité trop importante de matière grasse. Par ailleurs, une telle émulsion est instable au cours du temps.

Une telle composition alimentaire a par exemple été proposée dans le document FR-A-2 639 796 qui décrit un produit alimentaire formé d'un fourrage à base de fromage frais non fermenté et d'une matière grasse revêtue d'une couche de protection à base de chocolat.

Afin de stabiliser une telle émulsion, on a proposé par le brevet européen EP-B-256 561 un procédé de préparation d'une confiserie sous forme d'une mousse, à base d'une émulsion huile dans l'eau, contenant des constituants du lait, une ou plusieurs matières grasses, du sucre et de l'eau, et une farine de graines de caroube.

Cependant, la farine ou graines de caroube peut présenter un goût désagréable pour certains consommateurs et de plus conduit à un produit final dont la structure est visqueuse.

On a également proposé dans le document WO-A-95/22906 des compositions alimentaires comportant un biscuit ou une coque de chocolat et un fourrage à base de produit laitier fermenté ou non qui se présente sous la forme d'une émulsion eau dans huile. Cependant, bien que la consistance et la stabilité d'une telle composition soient satisfaisantes, la qualité gustative est très proche du beurre ou de la margarine et pourrait de ce fait limiter son développement.

On a, par ailleurs, décrit l'usage dans les compositions alimentaires d'esters de saccharose.

La brochure technique de la Société Sisterna B.V décrit des émulsifiants non ioniques obtenus par l'estérification de groupes hydroxyles primaires de saccharose avec des acides gras comestibles en tant qu'additifs alimentaires. Par exemple, une formulation de crème laitière pour café comprend selon les indications de cette brochure : 10 % d'huile végétale, 5 % de morceaux de sirop de maïs, 3 % de lait en poudre, 1 % de caséinate de sodium, 0,3 % d'ester de saccharose et d'acide stéarique ou palmitique (HLB=11), 0,2 % de Carrageenan et eau qsp. Il s'agit d'une crème très liquide.

Le document japonais JP-B-62-36649 envisage une composition fouettée du type yaourt, associée à une composition fouettée du type crème contenant en pourcentage en poids 18-35% d'une phase grasse formée d'un émulsifiant comprenant :
a) un ou deux émulsifiants choisis parmi la lécithine et les esters d'acides gras insaturés et de sorbitol,
b) un ester de saccharose et d'acide gras,
c) un ou plusieurs émulsifiants choisis parmi les esters d'acides gras saturés et de sorbitol, les esters d'acides gras et de propylène glycol, les esters d'acides gras et de glycérol ;
   65 à 82 % d'une phase aqueuse qui contient du sucre, une protéine soluble et un stabilisant.

On remarque que des émulsifiants autres que les esters de saccharose sont utilisés notamment dans la phase grasse (émulsifiants liposolubles). D'ailleurs, l'exemple 1 est relatif à une composition dont l'ester de saccharose a une HLB de 4. De plus, si l'on se réfère aux exemples, il s'avère que les compositions à base de yaourt présentent un extrait sec inférieur à 50 % et elles ne peuvent pas être utilisées de ce fait en tant que fourrage dans le sens de l'invention.

Il apparaît donc au vu de l'art antérieur décrit, qu'il serait souhaitable de proposer une composition alimentaire solide qui ne présente pas les inconvénients indiqués ci-dessus.

Un des objets de la présente invention est de proposer une nouvelle composition alimentaire solide dont le fourrage à base de produit laitier notamment frais, fermenté ou non, présente une stabilité suffisante pour l'utilisation considérée et éventuellement une qualité gustative similaire à un produit frais fermenté ou non.

Un autre objet de la présente invention est de proposer une nouvelle composition alimentaire solide à base d'un produit laitier, notamment frais, fermenté ou non permettant la préhension par la main et dont le fourrage ne coule pas aux températures habituelles de consommation.

Un autre objet de la présente invention est de proposer une composition alimentaire assimilable sur le plan réglementaire aux produits frais, c'est-à-dire un produit qui se conserve à 4 à 6°C pendant quelques semaines, de préférence de l'ordre de 4 à 6 semaines.

Ces problèmes ont été résolus grâce à la présente invention qui concerne une composition alimentaire solide formée d'un fourrage revêtu au moins partiellement d'une couche de protection, ladite composition étant caractérisée en ce que le fourrage est une émulsion huile dans l'eau foisonnée à base d'un produit laitier fermenté ou non, éventuellement frais, d'une ou plusieurs matières grasses essentiellement végétales qui comprend un ou plusieurs esters d'acides gras et de saccharose, ledit fourrage présentant un taux de foisonnement supérieur à 30 % en volume, un taux d'extrait sec compris entre 60 et 85% de préférence entre 65 et 80 % en poids.

En général, ledit fourrage présente une activité de l'eau comprise entre 0,65 et 0,90, de préférence entre 0,75 et 0,90 et un pH acide ou neutre.

Par produit laitier frais fermenté, on entend une base laitière qui, suite à un ensemencement par des bactéries lactiques a été fermentée, puis mélangée avec les autres ingrédients pour conduire au produit laitier frais fermenté. Ce produit laitier frais fermenté conservé entre 4 et 10°C, présente encore des bactéries vivantes, de préférence encore au moins 10² à 10⁵ bactéries vivantes par ml, pendant 4 à 6 semaines.

On cite également les poudres de yaourt.

Par produit laitier non fermenté on entend les laits en poudre, les laits écrémés, les laits demi-écrémés, les laits partiellement écrémés, entiers, les condensés.

De préférence, le produit laitier fermenté est choisi dans le groupe constitué par les fromages frais, les yaourts ou assimilés et autres produits laitiers fermentés contenant seules ou en mélange des bactéries lactiques vivantes, telles que S. thermophilus, L. bulgaricus, L. acidophilus, L. bifidus, L. lactococcus et Leuconostoc.

Le produit laitier est généralement dosé entre 10 et 40 %.

Une caractéristique importante de la composition de fourrage est qu'elle se présente sous la forme d'une émulsion huile dans l'eau, c'est-à-dire que des gouttelettes hydrophobes sont entourées d'eau, cette suspension étant stabilisée par un émulsifiant. Il s'agit donc d'un état physique radicalement différent des émulsions eau dans l'huile dans lesquelles la phase hydrophobe enferme les gouttelettes d'eau et assure la structure de la composition solide.

Les matières grasses selon l'invention peuvent encore être hydrogénées. Ces matières grasses présentent en général un point de fusion compris entre 25 et 40°C. Les matières grasses sont de préférence présentes dans une proportion en poids comprise entre 10 et 40 %, notamment 15 % et 40 % par rapport au fourrage.

Parmi les matières grasses, on cite notamment l'huile de coprah.

On a trouvé de manière inattendue que l'incorporation d'une quantité efficace d'un émulsifiant hydrosoluble constitué d'un ester d'acide gras et d'un sucre du type mono ou di saccharide notamment et dont la balance hydrophile/hydrophobe (HLB) est comprise entre 6 et 18, de préférence 8 et 18, avantageusement supérieur à 10 et encore plus avantageusement entre 12 et 16 permettait d'atteindre les buts énoncés dans la présentation de l'invention.

De façon encore plus inattendue on a trouvé qu'un tel émulsifiant permettait d'éviter la présence substantielle de tout autre émulsifiant. Cet émulsifiant hydrosoluble est présent dans une proportion en poids comprise entre 0,1 et 2%, avantageusement supérieur à 0,2 %.

L'invention concerne encore une composition alimentaire solide formée d'un fourrage revêtu au moins partiellement d'une couche de protection, ladite composition étant caractérisée en ce que le fourrage est une émulsion huile dans l'eau foisonnée, à base d'un produit laitier fermenté ou non, éventuellement frais, d'une ou plusieurs matières grasses essentiellement végétales, qui comprend un ou plusieurs émulsifiants hydrosolubles de type ester d'acide gras et de sucre de HLB comprise entre 6 et 18, ledit fourrage présentant un taux de foisonnement supérieur à 30 % en volume, un taux d'extrait sec compris entre 60 et 85 % de préférence entre 65 et 80 % en poids.

De préférence, l'émulsifiant hydrosoluble est substantiellement le seul émulsifiant présent dans la composition.

On a trouvé également de manière inattendue que l'incorporation d'une quantité efficace d'un émulsifiant choisi dans le groupe constitué par les esters d'acides gras et de saccharose permettait d'atteindre les buts énoncés dans la présentation de l'invention. Avantageusement ces esters sont présents dans une proportion en poids comprise entre 0,1 et 2%, avantageusement supérieur à 0,2 %.

Les acides gras sont notamment les acides de C₁₄ à C₂₀, avantageusement C₁₆ ou C₁₈, de préférence saturés.

Selon une variante préférée, les esters sont choisis dans le groupe constitué par le palmitate de saccharose ou le stéarate de saccharose seuls ou en mélange.

La balance hydrophile/hydrophobe (HLB) de ces esters sera de préférence comprise entre 6 et 18, de préférence 8 et 18, avantageusement supérieur à 10 et encore plus avantageusement entre 12 et 16 Ces esters résultent de l'estérification d'une ou plusieurs fonctions alcools primaires du saccharose.

Avantageusement ces esters sont les seuls émulsifiants présents dans la composition. C'est-à-dire que la composition ne comprend substantiellement pas d'émulsifiants liposolubles.

Afin d'abaisser l'activité de l'eau, il est souhaitable que la composition contienne un ou plusieurs sucres. Cette présence peut également améliorer la qualité gustative.

L'activité de l'eau d'un produit est une notion qui est bien connue dans le domaine alimentaire, cette mesure (en abrégé Aw) mesure la disponibilité de l'eau dans un produit. Dans la plupart des cas, cette activité de l'eau n'est pas proportionnelle à la teneur en eau du produit.

A titre d'exemple, un yaourt aux fruits comporte 82 % d'eau et possède une Aw égale à 0,99 ; le fromage frais contient 16 % d'eau et possède une Aw égale à 0,99.

Les méthodes permettant la mesure de l'Aw d'un produit sont connues de l'homme du métier.

Le fourrage de la composition alimentaire comprendra un taux de sucre tel que l'activité de l'eau de celui-ci sera comprise entre 0,65 et 0,90, de préférence entre 0,75 et 0,90. On notera que par activité de l'eau, on entend l'activité de l'eau de la composition après équilibre si nécessaire. L'activité de l'eau à l'équilibre dépendra de la couche de protection utilisée et de l'activité de l'eau initiale du fourrage.

On préférera utiliser des sucres dont la composition n'augmente pas trop le pouvoir sucrant du milieu, de façon à garder à la barre alimentaire une note de produit frais. Il s'agira donc avantageusement d'un mélange de sucres pouvant à la fois assurer la diminution de l'Aw et les qualités gustatives et diététiques.

Parmi les sucres, on citera le dextrose (dépresseur de l'activité de l'eau), le glucose sous forme de sirop de glucose, le maltose, le fructose, les polyols tels que le sorbitol, le glycérol.

Les sucres sont de préférence présents dans une proportion comprise entre 10 et 60 %, notamment 15 et 40 % par rapport au fourrage.

Afin d'améliorer les caractéristiques de fraicheur et de fondant du fourrage, le taux de foisonnement est supérieur à 30 %, de préférence de 100 à 250 %. Le foisonnement est assuré par injection d'un gaz inerte. Dans certains cas, le taux de foisonnement pourra atteindre ou dépasser 300 %.

Le fourrage pourra comprendre également des additifs tels que la poudre de lait fermenté, la poudre de lait écrémé ou non, notamment poudre de yaourt, des arômes et un agent stabilisant le foisonnement.

Le pH de ce fourrage est avantageusement compris entre 4 et 5 pour un produit laitier fermenté. En général, pour un produit sans pasteurisation le pH est compris entre 4 à 7 et pour un produit avec pasteurisation le pH est compris entre 6 et 7. Le pH peut être régulé par l'utilisation d'hydroxyde de calcium.

Il est également possible d'incorporer un ou plusieurs stabilisants tels que la gélatine, le guar, la xanthane, la pectine de 0,2% à 2 % pour permettre un produit plus crémeux et plus stable dans le temps.

L'émulsion obtenue dans ces conditions est très stable, mais se liquéfie en bouche avec une note de produit frais.

Selon une variante, le fourrage est enrichi en arômes et/ou charges solides alimentaires bien connus. Parmi les charges solides, on cite notamment les préparations de fruits, les particules de chocolat (pépites), les céréales, les noisettes.

De préférence, la composition alimentaire selon l'invention présente les proportions en poids suivantes des différents ingrédients la constituant, prises ou non en combinaison.

Ces intervalles de composition sont indiqués en ne tenant pas compte des arômes ou charges solides pouvant être ajoutés à la composition.
- produit laitier 10 à 40 %, notamment 20 à 40 %
- matières grasses essentiellement végétales 10 à 40 %, notamment 15 à 40 %
- sucres 10 à 60 %, notamment 15 à 40
- ester d'acide gras et de saccharose 0,1 à 2 %.

Par rapport à la composition, on peut ajouter 0 à 30 % d'arômes ou charges solides.

Selon une variante préférée, la composition alimentaire est caractérisée en ce que le fourrage présente la composition suivante en pourcentage en poids :
- produit laitier 10 à 40 %, notamment 20 à 40 %
- matières grasses essentiellement végétales 10 à 40%, notamment 15 à 40 %
- sucres 10 à 60 %, notamment 15 à 40 %
- ester d'acide gras et de saccharose 0,1 à 2 % éventuellement arômes, charges solides, stabilisant, les pourcentages étant indiqués sans tenir compte des charges solides et/ou des arômes,
- extrait sec 0,65 à 0,85.

De préférence, le fourrage présente la composition suivante :
- produit laitier contenant des bactéries lactiques vivantes 10 à 40 %, notamment 20 à 40 %
- matières grasses essentiellement végétales 10 à 40 %, notamment 15 à 40 %
- sucres choisis parmi le dextrose, le saccharose, le sirop de glucose déshydraté, le maltose, le fructose 17 à 31 %
- polyol(s) 0 à 10 %
- ester d'acide gras et de saccharose 0,1 à 2 % éventuellement arômes, charges solides, stabilisant, les pourcentages étant indiqués sans tenir compte des charges solides et/ou des arômes,
- extrait sec 0,65 à 0,85.

Les produits laitiers convenant pour les compositions ci-dessus sont éventuellement frais, fermentés ou non.

De façon générale, la composition alimentaire solide comprend 50 à 90 % de fourrage et 10 à 50 % d'une couche de protection qui peut être une combinaison de couches différentes.

Comme cela a déjà été indiqué ci-dessus, le fourrage est associé à une couche de protection qui peut être une base pâtissière. Cette base pâtissière fabriquée de manière connue est déposée sur le fourrage ou le fourrage peut être déposé sur cette base pâtissière.

Bien que les quantités de fourrage et de base pâtissière puissent varier dans des proportions notables, elles sont généralement comprises dans les proportions suivantes :
- fourrage 50 à 90 %
- base pâtissière 10 à 50 %.

L'invention a également pour objet une barre alimentaire formée d'un fourrage tel que décrit précédemment enrobé d'une coque de chocolat ou pâte à glacer selon les proportions suivantes :
- fourrage 50 à 90%
- coque en chocolat ou pâte à glacer 10 à 50 %.

On peut aussi effectuer une combinaison des différentes couches protectrices.

Une des caractéristiques permettant également de définir la composition alimentaire réside dans le procédé de préparation de celle-ci. Il s'est avéré en effet qu'il était important d'opérer le mélange et le foisonnement selon une mise en oeuvre détaillée ci-dessous.

La composition est donc encore caractérisée en ce que l'on forme une émulsion huile dans l'eau d'une phase homogène contenant le produit laitier éventuellement frais, fermenté ou non, l'ester de saccharose et d'acide gras, ou l'émulsifiant hydrosoluble de HLB 6 à 18, les sucres, éventuellement la poudre de lait fermenté, notamment poudre de yaourt et les arômes avec une phase huileuse contenant la matière grasse végétale et en ce que l'on soumet l'émulsion obtenue à un foisonnement dynamique en présence d'un stabilisant de foisonnement.

Le fourrage obtenu est ensuite enrobé de manière connue, soit par une coque de chocolat, soit par une pâte à glacer, soit par un glaçage, soit recouvert de tranches de base pâtissière ou biscuitière, soit une combinaison de ces différentes couches.

Eventuellement, des préparations de fruits ou des pépites de chocolat ou des céréales peuvent être incorporées au fourrage par un mélangeur statique.

Selon une variante préférée, on mélange le produit laitier notamment du yaourt avec un ester de saccharose, préparé sous forme d'une solution à 10 % si il n'y a pas assez d'eau disponible et si on ne soumet pas le produit à une pasteurisation selon les proportions indiquées dans la composition du fourrage précisée ci-dessus à une température appropriée comprise entre 35°C et 50°C puis sont ajoutés, toujours à la même température, les sucres, les arômes, la poudre de lait.

Par ailleurs, une huile végétale, éventuellement en présence d'un émulsifiant hydrophobe du type mono- et diglycérides est fondue puis ajoutée au mélange précédent, toujours à la même température, de façon à obtenir une émulsion huile dans l'eau. L'émulsion est refroidie par un échangeur à surface raclée.

La composition est ensuite soumise à un foisonnement dynamique avec incorporation éventuellement simultanée d'hydrocolloïde. Une autre possibilité est de refroidir et foisonner simultanément dans un refroidisseur.

Eventuellement, on incorpore à la composition une préparation de fruits ou des morceaux de chocolat ou des céréales.

L'invention concerne également une composition crémeuse utile notamment pour la réalisation d'un fourrage tel que décrit précédemment avec éventuellement une ou plusieurs variantes préférées.

L'invention sera maintenant décrite par les exemples de réalisation ci-après.

### Exemple n° 1

On obtient un fourrage de la façon suivante :

28 g de yaourt sont mélangés à 45°C avec 6 g d'une solution à 10 % d'ester d'acide palmitique et de saccharose et d'un ester d'acide stéarique et de saccharose de HLB 15, puis on ajoute à cette même température 2 g de poudre de yaourt, 25 g de sirop de glucose déshydraté, 2 g de sorbitol, 4 g de glycérine, de façon à obtenir une phase homogène.

La phase homogène à base de yaourt est mélangée à 45°C avec 28,6 g d'huile de coprah dans laquelle on a fondu 0,4 g de mono et diglycérides dans une cuve de mélange, puis refroidie à 14°C par échangeur à surface raclée. L'émulsion huile dans eau obtenue est soumise à froid à un foisonnement dynamique dans un appareil de type Mondomix avec incorporation d'une solution d'hydrocolloïde (4 g).

Le fourrage obtenu présente une teneur en matière grasse de 30%, une teneur en phase aqueuse de 30% et une teneur en sucre de 27 %. Le rapport phase grasse/phase aqueuse est de 1.

L'activité de l'eau du fourrage est de 0,9, le taux d'extrait sec est de 70 % et le taux de foisonnement est de 200 %. Le fourrage est ensuite enrobé de manière connue d'une génoise découpée en bandelettes.

Par exemple, une barre constituée de deux génoises entre lesquelles se trouve un fourrage au yaourt contenant des morceaux de fruits et pesant 28 g comprend 72 % de fourrage et 28 % de génoise, l'Aw du produit après équilibre est de 0,88 (alors que l'Aw est de 0,75 pour la génoise), le taux d'extrait sec est de 75 %.

### Exemple n° 2

Un autre fourrage peut être obtenu de la façon suivante : On mélange à sec 12 g de dextrose, 27 g de sirop de glucose déshydraté, 0,5 g d'ester de saccharose et d'acide palmitique et stéarique HLB = 5 avec 16,43 g de poudre de lait écrémé, 1 g de gélatine et 0,07 g d'hydroxyde de calcium. On ajoute ce mélange à 15 g d'eau à 90°C puis on agite fortement 28 g d'huile de coprah afin d'effectuer une émulsion huile dans eau. On réajuste le pH du mélange à 7 par l'ajout d'hydroxyde de calcium. On chauffe ce produit à 80°C, pendant 3 minutes. On refroidit et on foisonne à 20°C sur un échangeur à surface raclée à un taux de foisonnement de 30%.

Le fourrage obtenu a un taux de matière grasse de 28 % et un taux de matière sèche de 83 %. La teneur en sucre est de 49,5 %. Le rapport phase aqueuse / phase lipidique est de 2,6. L'activité de l'eau de ce fourrage est estimée à 70 %.

## Revendications

1. Composition alimentaire solide formée d'un fourrage revêtu au moins partiellement d'une couche de protection, ladite composition étant **caractérisée en ce que** le fourrage est une émulsion huile dans l'eau foisonnée à base d'un produit laitier fermenté ou non, frais ou non, d'une ou plusieurs matières grasses essentiellement végétales, ledit produit laitier étant dosé entre 10 et 40%, **caractérisé en ce qu'**il comprend un ou plusieurs esters d'acides gras et de saccharose présentant une balance hydrophile/lipophile comprise entre 6 et 18, de préférence supérieure à 10, ledit fourrage présentant un taux de foisonnement supérieur à 30 % en volume, un taux d'extrait sec compris entre 60 et 85 %, de préférence entre 65 et 80 % en poids.

2. Composition alimentaire solide selon la revendication 1, **caractérisée en ce que** le fourrage comprend un ou plusieurs sucres permettant d'abaisser l'activité de l'eau entre 0,65 et 0,90.

3. Composition alimentaire solide selon la revendication 2, **caractérisée en ce que** les sucres sont choisis dans le groupe constitué par le glucose, le saccharose, le dextrose, le maltose, le sorbitol, le glycérol.

4. Composition alimentaire solide selon l'une quelconque des revendications 1 à 3, **caractérisée en ce que** la matière grasse végétale est choisie dans le groupe constitué par les huiles hydrogénées ou non dont le point de fusion est compris entre 25°C et 40°C.

5. Composition alimentaire solide selon la revendication 1 ou 4, **caractérisée en ce que** la matière grasse végétale est présente dans une proportion en poids comprise entre 10 et 40 %, notamment 15 et 40 %.

6. Composition alimentaire solide selon l'une quelconque des revendications 1 à 5, **caractérisée en ce que** les esters d'acides gras et de saccharose résultent de l'estérification d'une ou plusieurs fonctions alcool primaires présentes sur le saccharose.

7. Composition alimentaire solide selon l'une quelconque des revendications 1 à 6, **caractérisée en ce que** les acides gras sont choisis dans le groupe constitué par les acides gras en C₁₄-C₂₀, de préférence saturés.

8. Composition alimentaire solide selon la revendication 7, **caractérisée en ce que** les esters d'acides gras et de saccharose sont choisis dans le groupe constitué par l'ester de l'acide palmitique et du saccharose et l'ester de l'acide stéarique et du saccharose seul ou en mélange.

9. Composition alimentaire solide selon la revendication 1, **caractérisée en ce** le taux de foisonnement est compris entre 100 et 250 %.

10. Composition alimentaire solide selon la revendication 1, **caractérisée en ce que** le produit laitier frais fermenté contient des bactéries lactiques vivantes.

11. Composition alimentaire solide selon la revendication 1, **caractérisée en ce que** le produit laitier non fermenté est choisi parmi les laits en poudre, les laits écrémés, les laits demi-écrémés, les laits partiellement écrémés, entiers, les condensés.

12. Composition alimentaire solide selon la revendication 11, **caractérisée en ce que** le produit laitier frais fermenté contient des bactéries lactiques vivantes, seules ou en mélange, choisies dans le groupe constitué par S. thermophilus, L. bulgaricus, L. acidophilus, L. bifidus, L. lactococcus et Leuconostoc, notamment les fromages frais et les yaourts ou assimilés.

13. Composition alimentaire solide selon l'une quelconque des revendications 1 à 12, **caractérisée en ce que** le fourrage est enrichi en charges solides et/ou en arômes.

14. Composition alimentaire solide selon la revendication 13, **caractérisée en ce que** les charges solides sont choisies dans le groupe constitué par les préparations de fruits, les particules de chocolat, les noisettes, les céréales.

15. Composition alimentaire solide selon l'une des revendications précédentes, **caractérisée en ce que** le fourrage présente la composition suivante en pourcentage en poids :
- produit laitier 10 à 40%, notamment 20 à 40 %
- matières grasses essentiellement végétales 10 à 40 %, notamment 15 à 40 %
- sucres 10 à 60 %, notamment 15 à 40 %
- ester d'acide gras et de saccharose 0,1 à 2 % éventuellement arômes, charges solides, stabilisant, les pourcentages étant indiqués sans tenir compte des charges solides et/ou des arômes,
- extrait sec 0,60 à 0,85

16. Composition alimentaire selon la revendication 15, **caractérisée en ce que** le fourrage présente la composition suivante :
- produit laitier contenant des bactéries lactiques vivantes 10 à 40 %, notamment 20 à 40 %
- matières grasses essentiellement végétales 10 à 40 %, notamment 15 à 40%
- sucres choisis parmi le dextrose, le sirop de glucose déshydraté, le maltose, le fructose 17 à 31 %
- polyol(s) 0 à 10 %
- ester d'acide gras et de saccharose 0,1 à 2 % éventuellement arômes, charges solides, stabilisant, les pourcentages étant indiqués sans tenir compte des charges solides et/ou des arômes,
- extrait sec 0,60 à 0,85

17. Composition alimentaire solide selon l'une des revendications 1 à 16, **caractérisée en ce que** le fourrage est susceptible d'être obtenu par le procédé suivant :
on forme une émulsion huile dans l'eau d'une phase homogène contenant le produit laitier frais ou non, fermenté ou non, l'ester de saccharose et d'acide gras présentant une balance hydrophile/lipophile comprise entre 6 et 18, de préférence supérieure à 10, les sucres, éventuellement la poudre de lait fermenté et les arômes avec une phase huileuse contenant la matière grasse végétale et **en ce que** l'on soumet l'émulsion obtenue à un foisonnement et refroidissement dynamique en présence d'un stabilisant de foisonnement.

18. Barre alimentaire formée de 50 à 90 % de fourrage tel que défini à l'une des revendications 1 à 17, et de 10 à 50 % d'une couche de protection, qui peut être une combinaison de couches différentes.

19. Barre alimentaire formée de 50 à 90 % de fourrage tel que défini à l'une des revendications 1 à 17, et de 10 à 50 % d'une base pâtissière.

20. Barre alimentaire chocolatée formée de 50 à 90 % de fourrage tel que défini à l'une des revendications 1 à 17, et de 10 à 50 % d'un enrobage de chocolat ou pâte à glacer ou de glaçage.

21. Procédé de préparation d'une composition alimentaire selon l'une des revendications 1 à 17, **caractérisé en ce qu'**on forme une émulsion huile dans l'eau d'une phase homogène contenant le produit laitier frais ou non, fermenté ou non, l'ester de saccharose et d'acide gras ayant une HLB comprise entre 6 et 18, de préférence supérieure à 10, les sucres, éventuellement la poudre de lait fermenté et les arômes avec une phase huileuse contenant la matière grasse végétale et **en ce que** l'on soumet l'émulsion obtenue à un foisonnement et refroidissement dynamique en présence d'un stabilisant de foisonnement et **en ce que** l'on associe le fourrage obtenu à une couche de protection.

22. Composition crémeuse utile notamment pour la réalisation d'un fourrage tel que décrit aux revendications 1 à 17, ledit produit laitier étant dosé entre 10 et 40%, **caractérisée en ce qu'**elle est sous la forme d'une émulsion huile dans l'eau, foisonnée, à base d'un produit laitier frais ou non, fermenté ou non, d'une ou plusieurs matières grasses végétales, et **en ce qu'**elle comprend un ou plusieurs esters d'acides gras et de saccharose ayant une HLB comprise entre 6 et 18, de préférence supérieure à 10, ladite composition présentant un taux de foisonnement supérieur à 30 %, et un taux d'extrait sec compris entre 60 et 85 % en poids.

## Patentansprüche

1. Feste Nahrungsmittelzusammensetzung, die aus einer Füllung, die wenigstens teilweise von einer Schutzschicht überzogen ist, gebildet wird, wobei die Zusammensetzung **dadurch gekennzeichnet ist, dass** die Füllung eine gequollene oder aufgeschlagene Öl-in-Wasser-Emulsion auf der Grundlage eines vergorenen oder nicht-vergorenen Frisch- oder Nicht-Frischmilchprodukts, eines oder mehrerer im Wesentlichen pflanzlicher Fette ist, wobei das Milchprodukt in einer Menge zwischen 10 und 40% vorhanden ist, **dadurch gekennzeichnet, dass** sie einen oder mehrere Ester von Fettsäuren und Saccharose umfasst, der bzw. die ein Hydrophil/Lipophil-Gleichgewicht zwischen 6 und 18, vorzugsweise über 10 aufweist bzw. aufweisen, wobei die Füllung einen Quellgrad oder Grad der Volumenzunahme aufgrund des Aufschlagens über 30 Vol.-%, einen Trockensubstanzanteil zwischen 60 und 85 Gew.-%, vorzugsweise zwischen 65 und 80 Gew.-% aufweist.

2. Feste Nahrungsmittelzusammensetzung nach Anspruch 1, **dadurch gekennzeichnet, dass** die Füllung einen oder mehrere Zukker umfasst, die es ermöglichen, die Aktivität des Wassers zwischen 0,65 und 0,90 zu senken.

3. Feste Nahrungsmittelzusammensetzung nach Anspruch 2, **dadurch gekennzeichnet, dass** die Zucker in der aus Glucose, Saccharose, Dextrose, Maltose, Sorbitol, Glycerol gebildeten Gruppe ausgewählt werden.

4. Feste Nahrungsmittelzusammensetzung nach einem der Ansprüche 1 bis 3, **dadurch gekennzeichnet, dass** das pflanzliche Fett in der aus den hydrierten oder nicht hydrierten Ölen, deren Schmelzpunkt zwischen 25°C und 40°C liegt, gebildeten Gruppe ausgewählt wird.

5. Feste Nahrungsmittelzusammensetzung nach Anspruch 1 oder 4, **dadurch gekennzeichnet, dass** das pflanzliche Fett in einem Gewichtsanteil zwischen 10 und 40%, insbesondere 15 und 40% vorhanden ist.

6. Feste Nahrungsmittelzusammensetzung nach einem der Ansprüche 1 bis 5, **dadurch gekennzeichnet, dass** die Ester von Fettsäuren und Saccharose aus der Veresterung von einer oder mehreren primären Alkoholfunktionen, die an der Saccharose vorhanden sind, hervorgehen.

7. Feste Nahrungsmittelzusammensetzung nach einem der Ansprüche 1 bis 6, **dadurch gekennzeichnet, dass** die Fettsäuren in der aus den vorzugsweise gesättigten C₁₄-C₂₀-Fettsäuren gebildeten Gruppe ausgewählt werden.

8. Feste Nahrungsmittelzusammensetzung nach Anspruch 7, **dadurch gekennzeichnet, dass** die Ester von Fettsäuren und Saccharose in der aus dem Ester von Palmitinsäure und Saccharose und dem Ester von Stearinsäure und Saccharose allein oder in einer Mischung gebildeten Gruppe ausgewählt werden.

9. Feste Nahrungsmittelzusammensetzung nach Anspruch 1, **dadurch gekennzeichnet, dass** der Quellgrad oder Grad der Volumenzunahme aufgrund des Aufschlagens zwischen 100 und 250% beträgt.

10. Feste Nahrungsmittelzusammensetzung nach Anspruch 1, **dadurch gekennzeichnet, dass** das vergorene Frischmilchprodukt lebende Milchsäurebakterien enthält.

11. Feste Nahrungsmittelzusammensetzung nach Anspruch 1, **dadurch gekennzeichnet, dass** das nicht-vergorene Milchprodukt unter den Milchpulvern, den entrahmten Milcherzeugnissen, den halbentrahmten Milcherzeugnissen, den teilweise entrahmten Milcherzeugnissen, den Vollmilcherzeugnissen, den Kondensmilcherzeugnissen ausgewählt wird.

12. Feste Nahrungsmittelzusammensetzung nach Anspruch 11, **dadurch gekennzeichnet, dass** das vergorene Frischmilchprodukt lebende Milchsäurebakterien, allein oder in einer Mischung, die in der aus S. thermophilus, L. bulgaricus, L. acidophilus, L. bifidus, L. lactococcus und Leuconostoc gebildeten Gruppe ausgewählt werden, enthält, insbesondere die Frischkäse oder Quarkerzeugnisse und die Joghurts oder gleichgestellte Erzeugnisse.

13. Feste Nahrungsmittelzusammensetzung nach einem der Ansprüche 1 bis 12, **dadurch gekennzeichnet, dass** die Füllung mit festen Füllstoffen und/oder mit Aromastoffen angereichert ist.

14. Feste Nahrungsmittelzusammensetzung nach Anspruch 13, **dadurch gekennzeichnet, dass** die festen Füllstoffe in der aus den Fruchtzubereitungen, den Schokoladeteilchen, den Nüssen, den Getreiden gebildeten Gruppe ausgewählt werden.

15. Feste Nahrungsmittelzusammensetzung nach einem der vorangegangenen Ansprüche, **dadurch gekennzeichnet, dass** die Füllung die folgende Zusammensetzung in Gewichtsprozent aufweist:
- 10 bis 40%, insbesondere 20 bis 40% Milchprodukt,
- 10 bis 40%, insbesondere 15 bis 40% im Wesentlichen pflanzliche Fette,
- 10 bis 60%, insbesondere 15 bis 40% Zucker,
- 0,1 bis 2% Ester von Fettsäure und Saccharose, gegebenenfalls Aromastoffe, feste Füllstoffe, Stabilisator, wobei die Prozentsätze ohne Berücksichtigung der festen Füllstoffe und/oder Aromastoffe angegeben sind.
- Trockenauszug 0,60 bis 0,85.

16. Nahrungsmittelzusammensetzung nach Anspruch 15, **dadurch gekennzeichnet, dass** die Füllung die folgende Zusammensetzung aufweist:
- 10 bis 40%, insbesondere 20 bis 40% Milchprodukt, das lebende Milchsäurebakterien enthält,
- 10 bis 40%, insbesondere 15 bis 40% im Wesentlichen pflanzliche Fette,
- 17 bis 31% Zucker, ausgewählt unter Dextrose, dehydratisiertem Glucosesirup, Maltose, Fructose,
- 0 bis 10% Polyol(e),
- 0,1 bis 2% Ester von Fettsäure und Saccharose, gegebenenfalls Aromastoffe, feste Füllstoffe, Stabilisator, wobei die Prozentsätze ohne Berücksichtigung der festen Füllstoffe und/oder Aromastoffe angegeben sind.
- Trockenauszug 0,60 bis 0,85.

17. Feste Nahrungsmittelzusammensetzung nach einem der Ansprüche 1 bis 16, **dadurch gekennzeichnet, dass** die Füllung durch das folgende Verfahren erhalten werden kann:
man bildet eine Öl-in-Wasser-Emulsion aus einer homogenen Phase, die das vergorene oder nicht-vergorene Frisch- oder Nicht-Frischmilchprodukt, den Ester von Saccharose und Fettsäure, der ein Hydrophil-Lipophil-Gleichgewicht zwischen 6 und 18, vorzugsweise über 10 aufweist, die Zucker, gegebenenfalls das Pulver von vergorener Milch und die Aromastoffe enthält, mit einer ölartigen Phase, die das pflanzliche Fett enthält, und
dass man die erhaltene Emulsion einem dynamischen Quellen oder Aufschlagen und Kühlen in Gegenwart eines Quellungs- oder Aufschlagungsstabilisierungsmittels unterwirft.

18. Nahrungsmittelriegel, der aus 50 bis 90% Füllung, wie in einem der Ansprüche 1 bis 17 definiert, und 10 bis 50% einer Schutzschicht, die eine Kombination von verschiedenen Schichten sein kann, gebildet wird.

19. Nahrungsmittelriegel, der aus 50 bis 90% Füllung, wie in einem der Ansprüche 1 bis 17 definiert, und 10 bis 50% eines Backwarenteigs gebildet wird.

20. Schokoladehaltiger Nahrungsmittelriegel, der aus 50 bis 90% Füllung, wie in einem der Ansprüche 1 bis 17 definiert, und 10 bis 50% einer Schokoladenumhüllung oder Überzugsmasse oder Glasur gebildet wird.

21. Verfahren zur Herstellung einer Nahrungsmittelzusammensetzung nach einem der Ansprüche 1 bis 17, **dadurch gekennzeichnet, dass** man eine Öl-in-Wasser-Emulsion aus einer homogenen Phase, die das vergorene oder nicht-vergorene Frisch- oder Nicht-Frischmilchprodukt, den Ester von Saccharose und Fettsäure, der ein HLB zwischen 6 und 18, vorzugsweise über 10 aufweist, die Zucker, gegebenenfalls das Pulver von vergorener Milch und die Aromastoffe enthält, mit einer ölartigen Phase, die das pflanzliche Fett enthält, bildet und dass man die erhaltene Emulsion einem dynamischen Quellen oder Aufschlagen und Kühlen in Gegenwart eines Quellungs- oder Aufschlagungsstabilisierungsmittels unterwirft und dass man die erhaltene Füllung mit einer Schutzschicht kombiniert.

22. Sahnige/cremige Zusammensetzung, die insbesondere für die Herstellung einer Füllung wie in den Ansprüchen 1 bis 17 beschrieben nützlich ist, wobei das Milchprodukt in einer Menge zwischen 10 und 40% vorhanden ist, **dadurch gekennzeichnet, dass** sie in Form einer gequollenen oder aufgeschlagenen Öl-in-Wasser-Emulsion auf der Grundlage eines vergorenen oder nicht-vergorenen Frisch- oder Nicht-Frischmilchprodukts, eines oder mehrerer pflanzlicher Fette vorliegt und dass sie einen oder mehrere Ester von Fettsäuren und Saccharose mit einem HLB zwischen 6 und 18, vorzugsweise über 10 umfasst, wobei die Zusammensetzung einen Quellgrad oder Grad der Volumenzunahme aufgrund des Aufschlagens über 30% und einen Trockensubstanzanteil zwischen 60 und 85 Gew.-% aufweist.

## Claims

1. Solid food composition made of a filling coated at least partly with a protective layer, said composition being **characterized in that** the filling is an oil-in-water emulsion with overrun based on a milk product, fermented or otherwise, fresh or not fresh, one or more fats, essentially vegetable fats, said milk product being metered in at between 10 and 40%, **characterized in that** it comprises one or more esters of fatty acids and of sucrose exhibiting a hydrophilic/lipophilic balance of between 6 and 18, preferably of greater than 10, said filling having a percentage overrun greater than 30% by volume, a dry extract content of between 60 and 85%, preferably between 65 and 80% by weight.

2. Solid food composition according to Claim 1, **characterized in that** the filling comprises one or more sugars which make it possible to reduce the water activity between 0.65 and 0.90.

3. Solid food composition according to Claim 2, **characterized in that** the sugars are chosen from the group consisting of glucose, sucrose, dextrose, maltose, sorbitol, glycerol.

4. Solid food composition according to any of Claims 1 to 3, **characterized in that** the vegetable fat is chosen from the group consisting of hydrogenated or non-hydrogenated oils whose melting point is between 25°C and 40°C.

5. Solid food composition according to Claim 1 or 4, **characterized in that** the vegetable fat is present in a proportion by weight of between 10 and 40%, especially 15 and 40%.

6. Solid food composition according to any of Claims 1 to 5, **characterized in that** the esters of fatty acids and of sucrose result from the esterification of one or more primary alcohol functions present in sucrose.

7. Solid food composition according to any of Claims 1 to 6, **characterized in that** the fatty acids are chosen from the group consisting of preferably saturated C₁₄-C₂₀ fatty acids.

8. Solid food composition according to Claim 7, **characterized in that** the esters of fatty acids and of sucrose are chosen from the group consisting of the ester of palmitic acid and of sucrose and the ester of stearic acid and of sucrose alone or as a mixture.

9. Solid food composition according to Claim 1, **characterized in that** the percentage overrun is between 100 and 250%.

10. Solid food composition according to Claim 1, **characterized in that** the fermented fresh milk product contains live lactic acid bacteria.

11. Solid food composition according to Claim 1, **characterized in that** the unfermented milk product is chosen from powdered milks, skimmed milks, semi-skimmed milks, partially skimmed milks, whole milks, condensed milks.

12. Solid food composition according to Claim 11, **characterized in that** the fermented fresh milk product contains live lactic acid bacteria, alone or as a mixture, chosen from the group consisting of S. thermophilus, L. bulgaricus, L. acidophilus, L. bifidus, L. lactococcus and Leuconostoc, especially fromage frais and yoghurts and the like.

13. Solid food composition according to any of Claims 1 to 12, **characterized in that** the filling is enriched with solid fillers and/or with flavourings.

14. Solid food composition according to Claim 13, **characterized in that** the solid fillers are chosen from the group consisting of fruit preparations, chocolate particles, hazelnuts, cereals.

15. Solid food composition according to one of the preceding claims, **characterized in that** the filling has the following composition in percentage by weight:
- milk product 10 to 40%, in particular 20 to 40%
- fats, essentially vegetable fats, 10 to 40%, especially 15 to 40%
- sugars 10 to 60%, especially 15 to 40%
- fatty acid and sucrose ester 0.1 to 2%
optionally flavourings, solid fillers, stabilizer, the percentages being indicated without taking into account solid fillers and/or flavourings,
- dry extract 0.60 to 0.85.

16. Food composition according to Claim 15, **characterized in that** the filling has the following composition:
- milk product containing live lactic acid bacteria 10 to 40% especially 20 to 40%
- fats, essentially vegetable fats, 10 to 40%, especially 15 to 40%
- sugars chosen from dextrose, dehydrated glucose syrup, maltose, fructose 17 to 31%
- polyol(s) 0 to 10%
- fatty acid and sucrose ester 0.1 to 2%
optionally flavourings, solid fillers, stabilizer, the percentages being indicated without taking into account solid fillers and/or flavourings,
- dry extract 0.60 to 0.85

17. Solid food composition according to one of Claims 1 to 16, **characterized in that** the filling can be obtained by the following method:
an oil-in-water emulsion of a homogeneous phase containing the milk product, fresh or not fresh, fermented or otherwise, the sucrose and fatty acid ester exhibiting a hydrophilic/lipophilic balance of between 6 and 18, preferably of greater than 10, the sugars, optionally the fermented milk powder and the flavourings, is made with an oily phase containing the vegetable fat, and **in that** the emulsion obtained is subjected to a dynamic cooling and overrun in the presence of an overrun stabilizer.

18. Food bar made of 50 to 90% of filling as defined in one of Claims 1 to 17, and of 10 to 50% of a protective layer, which may be a combination of various layers.

19. Food bar made of 50 to 90% of filling as defined in one of Claims 1 to 17, and of 10 to 50% of a pastry base.

20. Chocolate-containing food bar made of 50 to 90% of filling as defined in one of Claims 1 to 17, and of 10 to 50% of a coating made of chocolate or glazing paste or glaze.

21. Method of preparing a food composition according to one of Claims 1 to 17, **characterized in that** an oil-in-water emulsion of a homogeneous phase containing the milk product, fresh or not fresh, fermented or otherwise, the sucrose and fatty acid ester having a HLB of between 6 and 18, preferably of greater than 10, the sugars, optionally the fermented milk powder and the flavourings, is made with an oily phase containing the vegetable fat, and **in that** the emulsion obtained is subjected to a dynamic cooling and overrun in the presence of an overrun stabilizer and **in that** the filling obtained is combined with a protective layer.

22. Creamy composition useful especially for the preparation of a filling as described in Claims 1 to 17, said milk product being metered in at between 10 and 40%, **characterized in that** it is in the form of an oil-in-water emulsion with overrun, based on a milk product, fresh or not fresh, fermented or otherwise, one or more vegetable fats, and **in that** it comprises one or more esters of fatty acids and of sucrose having a HLB of between 6 and 18, preferably of greater than 10, said composition having a percentage overrun greater than 30%, and a dry extract content of between 60 and 85% by weight.
